# EUROPÄISCHE PATENTANMELDUNG

(11) **EP 4 786 112 A1**
(43) Veröffentlichungstag der Anmeldung: **05.08.2026**
(21) Anmeldenummer: 25154619.8
(22) Anmeldetag: 29.01.2025
(51) Int. Cl.: B25J 9/08, B25J 21/00, B23Q 7/04, B23Q 7/14, B23Q 11/08

(54) **MODULARE BE- UND ENTLADEZELLE**

(71) Anmelder: Schwäbische Werkzeugmaschinen GmbH, 78713 Schramberg-Waldmössingen (DE)
(72) Erfinder: Fontaine, Thomas, 78078 Niedereschach (DE); Wolf, Roman, 88069 Tettnang (DE); Wilhelm, Andreas, 88074 Meckenbeuren (DE); De Vries, Franciscus Petrus, 78078 Niedereschbach (DE); Rocker, Harmut, 88069 Tettnang (DE)
(74) Vertreter: Schorr, Peter Karl

(57) **Zusammenfassung**

Die Erfindung betrifft eine modulare Be- und Entladezelle (2), die an mindestens einer Werkzeugmaschine (6) anordenbar ist und von der aus die Werkzeugmaschine (6) be- und entladbar ist, mit mindestens einer mobilen Speicherzelle (4), die in einem vor der Werkzeugmaschine (6) angeordneten und einseitig durch die Werkzeugmaschine (6) begrenzten Be- und Entladebereich (8) anordenbar ist und die mindestens ein in einer vertikalen Ebene erstrecktes, flächenhaftes Speicherzellen-Wandelement (10) umfasst, und mit mindestens einer mobilen Handlingzelle (12), die im Be- und Entladebereich (8) mobil anordenbar ist und die mindestens ein in einer vertikalen Ebene erstrecktes Handlingzellen-Wandelement (14) umfasst, wobei Speicherzelle (4) und Handlingzelle (12) als separate Zellen ausgebildet und unabhängig voneinander bewegbar sind und wobei zumindest das mindestens eine Speicherzellen-Wandelement (10) und das mindestens eine Handlingzellen-Wandelement (14) bei einer gemeinsamen Anordnung von Speicherzelle (4) und Handlingzelle (12) im Be- und Entladebereich (8) eine gemeinsame Schutzwandung (16) bilden, die den Be- und Entladebereich (8) umfangsseitig umgibt und die den Be- und Entladebereich (8) nach außen abschirmt.

## Beschreibung

Die Erfindung betrifft eine modulare Be- und Entladezelle.

Aus dem Stand der Technik sind Be- und Entladezellen bekannt, die mobil an Arbeitsstationen verfahrbar sind und dort festlegbar sind. Bei den bekannten Be- und Entladezellen umfassen diese eine gemeinsame einteilige Zelle, die Teilespeicher, Greiferspeicher sowie einen Handlinggerät umfasst. Die einteilige Zelle ist solchenfalls als Speicherzelle ausgebildet, in die der Teilespeicher, der Greiferspeicher und der Handlinggerät unlösbar festgelegt sind.

Der Vorteil derartiger Be- und Entladezellen ist, dass diese als abgeschlossenes System vor einer Werkzeugmaschine einen Be- und Entladebereich in Gänze umgeben und hierdurch Bedienpersonal vor potentiellen Gefahren beim Be- und Entladen einer Werkzeugmaschine schützen.

Es hat sich als nachteilig herausgestellt, dass bei den bekannten Be- und Entladezellen diese immer in Gänze verfahren werden müssen, um beispielsweise bearbeitete Werkstücke zu übergeben oder den Handlinggerät mit entsprechend neuen Greifern auszustatten. Dieses erweist sich als zeitaufwändig und unflexibel.

Eine Aufgabe eines Ausführungsbeispiels der Erfindung ist, eine Be- und Entladezelle vorzuschlagen, die flexibler einsetzbar ist.

Diese Aufgabe wird gelöst durch eine modulare Be- und Entladezelle, die an mindestens einer Werkzeugmaschine anordenbar ist und von der aus die Werkzeugmaschine be- und entladbar ist, mit mindestens einer mobilen Speicherzelle, die in einem vor der Werkzeugmaschine angeordneten und einseitig durch die Werkzeugmaschine begrenzten Be- und Entladebereich anordenbar ist und die mindestens ein in einer vertikalen Ebene erstrecktes, flächenhaftes Speicherzellen-Wandelement umfasst, und mit mindestens einer mobilen Handlingzelle, die im Be- und Entladebereich mobil anordenbar ist und die mindestens ein in einer vertikalen Ebene erstrecktes Handlingzellen-Wandelement umfasst, wobei Speicherzelle und Handlingzelle als separate Zellen ausgebildet und unabhängig voneinander bewegbar sind und wobei zumindest das mindestens eine Speicherzellen-Wandelement und das mindestens eine Handlingzellen-Wandelement bei einer gemeinsamen Anordnung von Speicherzelle und Handlingzelle im Be- und Entladebereich eine gemeinsame Schutzwandung bilden, die den Be- und Entladebereich umfangsseitig umgibt und die den Be- und Entladebereich nach außen abschirmt.

Dadurch, dass die Be- und Entladezelle eine mobile Speicherzelle und eine von der mobilen Speicherzelle unabhängige mobile Handlingzelle umfasst, ist die Be- und Entladezelle flexibler einsetzbar. Hierdurch ist es beispielsweise ermöglicht, die mobile Speicherzelle auszutauschen und die Handlingzelle im Be- und Entladebereich der Werkzeugmaschine zu belassen.

Dadurch, dass die mobile Speicherzelle ein flächenhaftes Speicherzellen-Wandelement und die Handlingzelle ein flächenhaftes Handlingzellen-Wandelement umfasst, die in einer im Be- und Entladebereich angeordneten Position eine gemeinsame Schutzwandung bilden, ist gewährleistet, dass Bedienpersonal beim Betreiben der Be- und Entladezelle geschützt ist.

Das mindestens eine Speicherzellen-Wandelement und/oder das mindestens eine Handlingzellen-Wandelement sind bzw. ist hierbei insbesondere derart ausgebildet, dass diese auf Höhe einer Be- und Entladung der Werkzeugmaschine im Wesentlichen an dem freien Bereich des Be- und Entladebereichs umlaufend ausgebildet sind.

Der Be- und Entladebereich kann ein gedanklich vorhandener Bereich sein oder durch ein Visualisierungsmittel an einem vor der Werkzeugmaschine befindlichen Untergrund, wie Boden, eine anwendererfassbare Markierung umfassen. Hierdurch ist der Be- und Entladebereich für Betriebspersonal optisch anwendererfassbar, auch wenn keine mobile Be- und Entladezelle vor der Werkzeugmaschine angeordnet ist.

Die modulare Be- und Entladezelle kann vor einer Werkzeugmaschine angeordnet werden. Darüber hinaus sind Ausführungsformen der modularen Be- und Entladezelle denkbar, bei denen diese vor einer beliebigen Arbeitsstation angeordnet wird.

Bei einer Ausführungsform der modularen Be- und Entladestelle ist vorgesehen, dass die Handlingzelle im Be- und Entladebereich unmittelbar an die Werkzeugmaschine angrenzend angeordnet ist und mindestens zwei Handlingzellen-Wandelemente umfasst, die beim im Be- und Entladebereich angeordneten Zustand der Handlingzelle auf einander gegenüberliegenden Seiten des Be- und Entladebereich angeordnet sind und dass die Speicherzelle im Be- und Entladebereich unmittelbar an die Handlingzelle angrenzend auf einer der Werkzeugmaschine abgewandten Seite der Handlingzelle angeordnet ist und die mindestens ein Speicherzellen-Wandelement umfasst, wobei das mindestens eine Speicherzellen-Wandelement insgesamt einen U-förmigen Querschnitt umfasst und mit den der Handlingzelle zugewandten freien Enden des mindestens einen Speicherzellen-Wandelements unmittelbar an die zwei Handlingzellen-Wandelemente angrenzend anordnet ist.

Dadurch, dass bei dieser Anordnung, bei der die Handlingzelle unmittelbar an die Werkzeugmaschine angrenzend angeordnet ist und entsprechend zwei Handlingzellen-Wandelemente umfasst, die auf einander gegenüberliegenden Seiten des Be- und Entladebereichs angeordnet sind, ergänzen sich diese mit dem mindestens einen Speicherzellen-Wandelement, das insgesamt einen U-förmigen Querschnitt umfasst.

Unter "insgesamt einen U-förmigen Querschnitt umfasst" wird verstanden, dass wenn die Speicherzelle ein einziges Speicherzellen-Wandelement umfasst, dieses einzige Speicherzellen-Wandelement einen U-förmigen Querschnitt umfasst und wenn die Speicherzelle mehrere Speicherzellen-Wandelemente umfasst, diese insgesamt einen U-förmigen Querschnitt bilden. Letzterenfalls, wenn mehrere Speicherzellen-Wandelemente vorgesehen sind, grenzen jeweils die beiden Speicherzellen-Wandelemente an die Handlingzellen-Wandelemente an, die der Handlingzelle am nächsten sind.

Die an die Werkzeugmaschine oder Arbeitsstation angrenzenden Wandelement können quer oder schräg zur Wandung der Werkzeugmaschine angeordnet sein, an die die mittelbar oder unmittelbar angrenzen.

Das mindestens eine Speicherzellen-Wandelement und das mindestens eine Handlingzellen-Wandelement liegen in einer im Be- und Entladebereich angeordneten Zustand, vorzugweise spaltfrei und ineinander übergehend, an. Hierdurch kann die Sicherheit für Bedienpersonal außerhalb der Be- und Entladezelle weiter gesteigert werden.

Alternativ zu letztgenannter Ausführungsform ist bei einer modularen Be- und Entladezelle vorgesehen, dass die Speicherzelle im Be- und Entladebereich unmittelbar an die Werkzeugmaschine angrenzend angeordnet ist und mindestens zwei Speicherzellen-Wandelemente umfasst, die beim im Be- und Entladebereich angeordneten Zustand der Speicherzelle auf einander gegenüberliegenden Seiten des Be- und Entladebereich angeordnet sind und dass die Handlingzelle im Be- und Entladebereich unmittelbar an die Speicherzelle angrenzend auf einer der Werkzeugmaschine abgewandten Seite der Speicherzelle angeordnet ist und die mindestens ein Handlingzellen-Wandelement umfasst, wobei das mindestens eine Handlingzellen-Wandelement insgesamt einen U-förmigen Querschnitt umfasst und mit den der Speicherzelle zugewandten freien Enden des mindestens einen Handlingzellen-Wandelements unmittelbar an die zwei Speicherzellen-Wandelemente angrenzend anordnet ist.

Solchenfalls greift ein in der Handlingzelle anordenbares oder angeordnetes Handlinggerät zum Be- und Entladen der Werkzeugmaschine über die Speicherzelle drüber.

Analog zu vorgenannter Ausführungsform liegt hierbei die Speicherzelle mit zwei Speicherzellen-Wandelementen unmittelbar an der Werkzeugmaschine an.

Die Handlingzelle kann entweder ein einziges Handlingzellen-Wandelement umfassen, dass einen U-förmigen Querschnitt umfasst oder mehrere Handlingzellen-Wandelemente, die zusammen einen U-förmigen Querschnitt umfassen. Die beiden Handlingzellen-Wandelemente, die der Speicherzelle zugewandt und dieser am nächsten sind, gehen entsprechend in die Speicherzellen-Wandelemente, vorzugweise stufenlos, über.

Die Flexibilität der modularen Be- und Entladezelle lässt sich weiter steigern, wenn diese mindestens einen bewegbaren Funktionswagen umfasst, der über mindestens eine Öffnung im Speicherzellen-Wandelement in die Speicherzelle bewegbar und darin anordenbar ist und auf dem mindestens ein Funktionselement, wie Werkstück, Greifelement, Einspannvorrichtung für ein Werkstück und/oder Werkzeug, angeordnet ist und der mindestens ein in einer vertikalen Ebene erstrecktes Funktionswagen-Wandelement umfasst, das in einer in der Speicherzelle angeordneten Anordnung des Funktionswagens mindestens ein der mindestens einen Öffnung verschließt.

Dadurch, dass die modulare Be- und Entladezelle mindestens einen bewegbaren Funktionswagen umfasst, der in die Speicherzelle bewegbar und in der Speicherzellen anordenbar ist und auf dem mindestens ein Funktionselement, wie Werkstück, Greifelement und/oder Werkzeug, angeordnet ist, muss zu einem Austausch, Aufnahme und/oder Abgabe von beispielsweise Werkstücken, Greifelementen, Einspannvorrichtungen für Werkstücke und/oder Werkzeugen, nicht die gesamte Be- und Entladezelle, insbesondere die Speicherzelle, bewegt werden, sondern es reicht aus, den bewegbaren Funktionswagen zu bewegen.

Bei Ausführungsformen umfasst die modulare Be- und Entladezelle mindestens zwei bewegbare Funktionswagen. Hierbei kann einer der beiden Funktionswagen, beispielsweise von der Be- und Entladezelle zu einem Materiallager, Greiferlager, Einspannvorrichtungslager und/oder Werkzeuglager bewegt werden, um die entsprechenden Funktionselemente aufzunehmen oder abzugeben. Der in der Speicherzelle verbliebene Funktionswagen kann hierbei ausreichend bestückt sein, um ein Arbeiten mit einem Handlinggerät zu ermöglichen.

Die Einspannvorrichtung kann in der Werkzeugmaschine oder Arbeitsstation festgelegt werden, um Werkstücke an dieser einzuspannen.

Ferner kann das Werkstück beim Bearbeiten durch die Werkzeugmaschine durch das Handlinggerät gehalten werden. Hierbei kann das Werkstück unmittelbar am Handlinggerät anliegen oder durch die Einspannvorrichtung gehalten sein, wobei das Handlinggerät die Einspannvorrichtung unmittelbar hält.

Bei einer Ausführungsform der modularen Be- und Entladezelle umfasst diese mindestens ein stationäres oder bewegbares Handlinggerät, das zum Be- und Entladen der Werkzeugmaschine mit Funktionselementen in der Handlingzelle anordenbar oder angeordnet ist.

Das Handlinggerät kann einen Roboter, ein mehrachsiges System, einen Lift, ein Teleskopmittel oder ein Bearbeitungsgerät umfassen.

Grundsätzlich ist es denkbar, dass die Be- und Entladezelle zu einem stationären Handlinggerät bewegt wird, um durch dieses eine Arbeitsstation oder Werkzeugmaschine zu be- und/oder entladen.

Darüber hinaus sind Ausführungsformen denkbar, bei denen das Handlinggerät selbst bewegbar ist. Solchenfalls kann ein und dasselbe Handlinggerät von einer Arbeitsstation, bzw. Werkzeugmaschine zur nächsten Arbeitsstation, bzw. Werkzeugmaschine, verfahren werden. Hierdurch ist die Anzahl der vorzuhaltenden Handlinggeräte reduzierbar.

Bei einer Weiterbildung letztgenannter Ausführungsform erweist es sich als vorteilhaft, wenn das Handlinggerät lösbar, insbesondere form- oder kraftschlüssig, oder unlösbar, insbesondere form-, stoff- und/oder kraftschlüssig, an der Handlingzelle festgelegt ist und wenn Handlinggerät und Handlingzelle gemeinsam bewegbar ausgebildet sind.

Hierdurch sind Handlinggerät und Handlingzelle gemeinsam bewegbar ausbildbar. Bei einer Weiterbildung der modularen Be- und Entladezelle erweist es sich als vorteilhaft, wenn mindestens einer des mindestens einen bewegbaren Funktionswagens mindestens einen Werkstückwagen, an dem oder auf dem zumindest mindestens ein durch die Werkzeugmaschine zu bearbeitendes oder durch die Werkzeugmaschine bearbeitetes Werkstück anordenbar ist oder angeordnet, mindestens einen Werkzeugwagen, an dem oder auf dem zumindest mindestens ein Werkzeug für die Werkzeugmaschine oder von der Werkzeugmaschine anordenbar oder angeordnet ist, mindestens einen Einspannvorrichtungsgwagen, an dem oder auf dem zumindest mindestens eine für ein Werkstück anordenbar oder angeordnet ist, oder mindestens einen Greiferwagen umfasst, an dem oder auf dem zumindest mindestens ein Greifmittel für das Handlinggerät zum Greifen mindestens eines Werkzeug anordenbar oder angeordnet ist.

Auf dem Werkstückwagen sind zumindest durch die Werkzeugmaschine zu bearbeitende oder durch die Werkzeugmaschine bearbeitete Werkstücke anordenbar. Darüber hinaus ist es denkbar, dass auf dem Werkstückwagen auch Greifelemente oder Werkzeuge angeordnet sind. Die Greifelemente können korrespondierend zu den auf dem Werkstückwagen zu transportierenden Werkstücken ausgebildet sein und das Handlinggerät in die Lage versetzen, durch Aufnahme des Greifers und Anordnen des Greifers am Handlinggerät, die Werkstücke zu greifen. Darüber hinaus ist es denkbar, durch die zur Verfügung gestellten Werkzeuge diese durch ein Handlinggerät in der Werkzeugmaschine anzuordnen, um ein Bearbeiten der Werkstücke zu ermöglichen.

Ferner sind Ausführungsformen denkbar, bei denen die Greifer an einem Greiferwagen angeordnet sind zusätzlich auch Werkzeuge für die Werkzeugmaschine angeordnet sind. Umgekehrt können an einem Werkzeugwagen auch Greifelemente angeordnet sein.

Um ein unabhängiges Bewegen der einzelnen Komponenten der modularen Be- und Entladezelle zu ermöglichen, erweist es sich als vorteilhaft, wenn die Speicherzelle mindestens ein Speicherzellen-Antriebsmittel umfasst, durch das die Speicherzelle eigenbeweglich verfahrbar ist, wenn die Handlingzelle mindestens ein Handlingzellen-Antriebsmittel umfasst, durch das die Handlingzelle eigenbeweglich verfahrbar ist, dass mindestens einer des mindestens einen Funktionswagens mindestens ein Funktionswagen-Antriebsmittel umfasst, durch das der Funktionswagen eigenbeweglich verfahrbar ist und/oder wenn mindestens eines des mindestens einen Handlinggeräts mindestens ein Handlinggerät-Antriebsmittel umfasst, durch das das Handlinggerät eigenbeweglich verfahrbar ist.

Ergänzend oder alternativ hierzu kann die modulare Be- und Entladezelle mindestens ein Transportmittel, wie autonomer, mobiler Roboter oder automatisiertes fahrerloses Transportfahrzeug, umfassen, durch das die Speicherzelle und/oder die Handlingzelle transportierbar und im Be- und Entladebereich anordenbar oder entfernbar ist und/oder durch das mindestens einer des mindestens einen Funktionswagens transportierbar und in der im Be- und Entladebereich angeordneten Speicherzelle und/oder mindestens eines des mindestens einen Handlinggeräts transportierbar in der im Be- und Entladebereich angeordneten Handlingzelle anordenbar oder entfernbar ist.

Um zu gewährleisten, dass sich das Handlinggerät, im im Be- und Entladebereich angeordneten Zustand, im Wesentlichen nicht bewegt, sondern ortsfest relativ zur Werkzeugmaschine angeordnet ist, ist bei einer Ausführungsform der modularen Be- und Entladezelle mindestens eine Festlegeeinrichtung vorgesehen, die mindestens ein Be- und Entlade-Festlegemittel umfasst, das im Be- und Entladebereich angeordnet ist, und die mindestens ein Handlinggerät-Festlegemittel umfasst, das am Handlinggerät festgelegt ist und durch das das Handlinggerät im Be- und Entladebereich relativ zur Werkzeugmaschine lösbar, insbesondere form- und/oder kraftschlüssig, am Be- und Entlade-Festlegemittel ortsfest festlegbar ist.

Um die Zeitdauer einer Inbetriebnahme des Handlinggeräts, der in einem Be- und Entladebereich bewegt wurde und an der Werkzeugmaschine oder Arbeitsstation angeordnet wurde, zu verkürzen, erweist es sich als vorteilhaft, wenn das mindestens eine Handlinggerät einen elektrischen Energiespeicher umfasst, durch den das Handlinggerät zumindest beim Verfahren mit elektrischer Energie versorgbar ist und/oder wenn das Handlinggerät eine Steuereinheit umfasst, durch die das Handlinggerät zum Be- und Entladen der Werkzeugmaschinen ansteuerbar ist und die beim Verfahren des Handlinggeräts aktiv ist und insbesondere durch den elektrischen Energiespeicher mit elektrischer Energie versorgbar ist.

Dadurch, dass das Handlinggerät einen elektrischen Energiespeicher umfasst, der die Steuereinheit mit elektrischer Energie versorgt, insbesondere beim Verfahren des Handlinggeräts und dadurch, dass die Steuereinheit des Handlinggeräts beim Verfahren aktiv ist, sind die Zeiten für ein Installieren des Handlinggeräts vor einer Werkzeugmaschine oder Arbeitsstation verkürzt. Hierdurch kann das Handlinggerät innerhalb kurzer Zeit mit seinen Tätigkeiten im Be- und Entladebereich, insbesondere dem Be- und Entladen der Werkzeugmaschine beginnen.

Insbesondere, um den im Handlinggerät verbauten elektrischen Energiespeicher kompakt und hierdurch effizient zu gestalten, erweist es sich als vorteilhaft, wenn die modulare Be- und Entladezelle mindestens eine elektrische Energieversorgung umfasst, die mindestens einen Zugang im Be- und Entladebereich, und die mindestens ein Handlinggerät-Koppelmittel umfasst, das am Handlinggerät festgelegt ist und durch das das Handlinggerät im Be- und Entladebereich mit der elektrischen Energieversorgung koppelbar und durch die elektrische Energieversorgung zum Betrieb mit elektrischer Energie versorgbar ist.

Der elektrische Energiespeicher, der im Handlinggerät verbaut sein kann, kann beispielsweise eine Batterie umfassen, durch die beispielsweise 24V Gleichstrom zur Verfügung gestellt wird. Dieses ist ausreichend, um die Steuereinheit im Handlinggerät beim Verfahren aktiv zu halten.

Die durch die elektrische Energieversorgung zur Verfügung stellbare elektrische Energie kann hingegen beispielsweise 400V Wechselstrom umfassen, wodurch die einzelnen Arme des Handlinggeräts zum Durchführen der Tätigkeiten mit ausreichend elektrischer Energie versorgbar sind.

Darüber hinaus erweist es sich als vorteilhaft, wenn die modulare Be- und Entladezelle mindestens eine Kalibriereinrichtung umfasst, die mindestens ein ortsfest im Be- und Entladebereich festgelegtes, insbesondere einen Data-Matrix-Code umfassendes, Anzeigemittel, und die mindestens ein optisches Erfassungsmittel, wie Sensor oder Kamera, das am Handlinggerät festgelegt ist, durch das das mindestens eine Funktionselement und/oder durch das das Anzeigemittel erfassbar ist.

Durch die Kalibriereinrichtung ist es auf einfache Weise ermöglicht, dass das Handlinggerät nach dem Anordnen im Be- und Entladebereich unter Zuhilfenahme seines Erfassungsmittels durch Erfassen des Anzeigemittels, seine genaue Position im Be- und Entladebereich und hierdurch seine genaue Position relativ zur Werkzeugmaschine, bzw. Arbeitsstation, erfassen kann.

Darüber hinaus ist es durch das Erfassungsmittel, das am Handlinggerät festgelegt ist, ermöglicht, die Funktionselemente optisch zu erfassen und hierdurch zu greifen.

Solchenfalls ist vorgesehen, dass das optische Erfassungsmittel der Steuereinheit funktional zugeordnet ist und dass das Handlinggerät durch die Steuereinheit zum Aufnehmen und Ablegen von Funktionselementen ansteuerbar und/oder zum Kalibrieren des Bezugsorts relativ zur Werkzeugmaschine kalibrierbar ist.

Hierdurch kann mit dem gleichen optischen Erfassungsmittel, das am Handlinggerät festgelegt ist, sowohl das Anzeigemittel, das beispielsweise einen Data-Matrix-Code umfassen kann, auch eine 2D- oder 3D-Kommissionierung stattfinden.

Schließlich erweist es sich als vorteilhaft, wenn die modulare Be- und Entladezelle mindestens eine Führungseinrichtung umfasst, die mindestens ein zwischen mindestens zwei Be- und Entladebereichen zweier Werkzeugmaschinen erstrecktes Schienenmittel und die mindestens ein Schlittenmittel umfasst, das am Handlinggerät festgelegt ist und durch das das Handlinggerät geführt vom Be- und Entladebereiche einer ersten Werkzeugmaschine zum Be- und Entladebereich mindestens einer weiteren Werkzeugmaschine bewegbar ist.

Solchenfalls kann der mindestens eine Handlinggerät auf einer siebten Achse bezüglich der Werkzeugmaschine oder Arbeitsstation verfahren werden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der modularen Be- und Entladezelle.

In der Zeichnung zeigt:
- Figur 1: Eine perspektivische Vorderansicht auf ein Ausführungsbeispiel der modularen Be- und Entladezelle;
- Figur 2: Eine perspektivische Vorderansicht der modularen Be- und Entladezelle gemäß Figur 1 ohne Handlingzelle und ohne Funktionswagen;
- Figur 3: Eine schematische Darstellung der einzelnen Komponenten der modularen Be- und Entladezelle;
- Figur 4: Eine isometrische schematische Darstellung eines Handlinggeräts mit Kalibriereinrichtung.

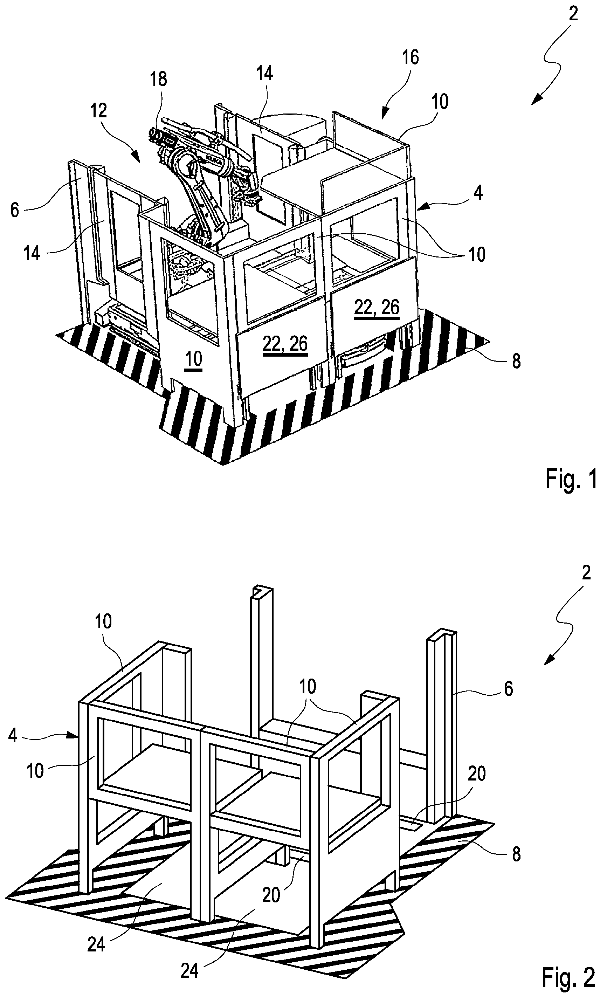

Figur 1 zeigt ein Ausführungsbeispiel einer insgesamt mit dem Bezugszeichen 2 versehenen modularen Be- und Entladezelle. Gemäß Darstellung nach Figur 1 ist die modulare Be- und Entladezelle 2 mit in einer Konfiguration mit der maximal möglichen Anzahl von Modulen bestückt. Hierzu umfasst die modulare Be- und Entladezelle 2 eine mobile Speicherzelle 4, die in einem vor einer Werkzeugmaschine 6 angeordneten und einseitig durch die Werkzeugmaschine 6 begrenzenden Be- und Entladebereich 8 angeordnet ist. Die Werkzeugmaschine 6 ist in den Figuren lediglich durch einen Eingangsrahmen symbolhaft dargestellt.

Die Speicherzelle 4 umfasst bei dem in den Figuren gezeigten Ausführungsbeispiel mehrere flächenhaften Speicherzellen-Wandelemente 10, die zusammen einen U-förmigen Querschnitt bilden.

Darüber hinaus umfasst die modulare Be- und Entladezelle 2 bei dem in Figur 1 ersichtlichen Ausführungsbeispiel eine mobile Handlingzelle 12, die im Be- und Entladebereich 8 unmittelbar vor der Werkzeugmaschine 6 angeordnet ist. Die Handlingzelle 12 steht bei dem in den Figuren gezeigten Ausführungsbeispielen zwischen Speicherzelle 4 und Werkzeugmaschine 6.

Die Handlingzelle 12 umfasst zwei in einer vertikalen Ebene erstreckte Handlingzellen-Wandelemente 14. Gemeinsam mit den Speicherzellen-Wandelementen 10 bilden die Handlingzellen-Wandelemente 14 eine gemeinsame Schutzwandung 16, die den Be- und Entladebereich 8 umfangsseitig umgibt und die den Be- und Entladebereich 8 nach außen abschirmt.

Bei dem in Figur 1 ersichtlichen Ausführungsbeispiel ist in der mobilen Handlingzelle 12 ein bewegbares Handlinggerät 18 angeordnet. Dieses dient zum Be- und Entladen der Werkzeugmaschine 6 mit Funktionselementen. Das Handlinggerät 18 ist über eine Festlegeeinrichtung 20 ortsfest in dem Be- und Entladebereich 8 angeordnet. Aus den Figuren nicht explizit ersichtlich, umfasst die Festlegeeinrichtung 20 ein im Be- und Entladebereich 8 angeordnetes Be- und Entlade-Festlegemittel sowie ein am Handlinggerät 18 angeordnetes Handlinggerät-Festlegemittel, das beim Anordnen des Handlinggeräts 18 im Be- und Entladebereich 8 mit dem Be- und Entlade-Festlegmittel zusammenwirkt.

Darüber hinaus sind bei der Darstellung gemäß Figur 1 in der Speicherzelle 4 zwei Funktionswagen 22 angeordnet. Diese sind über mindestens eine Öffnung 24 im Speicherzellen-Wandelement 10 in die Speicherzelle 4 bewegbar und darin anordenbar. Zum Verschließen der Öffnung 24 im Speicherzellen-Wandelement 10 umfassen die Funktionswagen 22 jeweils ein Funktionswagen-Wandelement 26. Im in der Speicherzelle 4 angeordneten Zustand verschließen die Funktionswagen-Wandelemente 26 die Öffnungen 24 im Speicherzellen-Wandelement 10.

Figur 2 zeigt eine isometrische Ansicht der modularen Be- und Entladezelle 2 gemäß Figur 1. Bei dieser ist lediglich die Speicherzelle 4 im Be- und Entladebereich 8 angeordnet. Aus Figur 2 ist ersichtlich, dass die dort gezeigte Speicherzelle 4 zur Aufnahme von zwei Funktionswagen 22 ausgebildet ist. Hierzu umfasst die Speicherzelle 4 zwei Öffnungen 24, in denen jeweils ein Funktionswagen 22 einfahren kann.

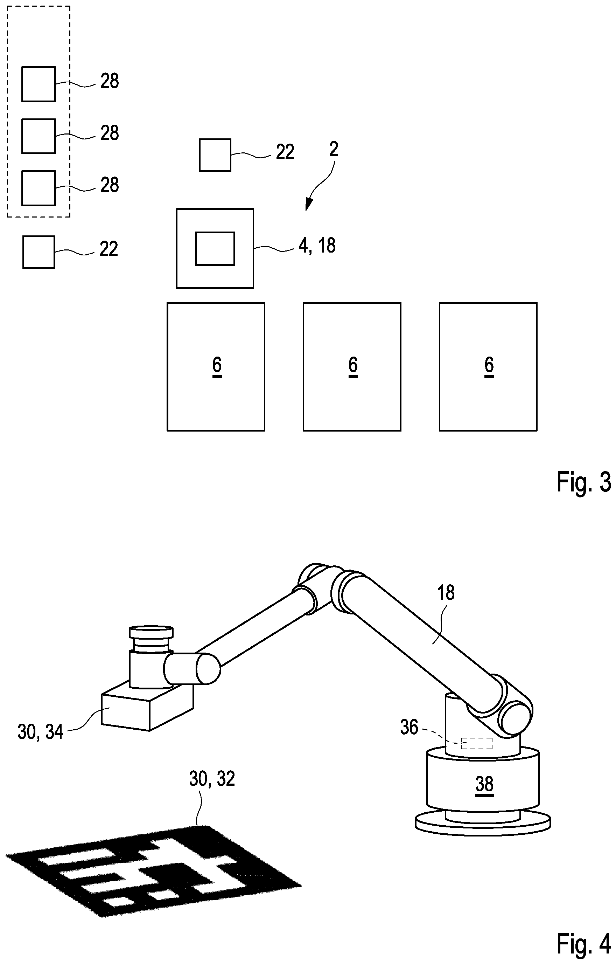

Figur 3 zeigt eine schematische Darstellung der modularen Be- und Entladezelle 2 gemäß Figuren 1 und 2. Zum Anordnen der einzelnen Komponenten, insbesondere der mobilen Speicherzelle 4, der mobilen Handlingzelle 12, des Handlinggeräts 18 sowie der Funktionswagen 22, sind bei der in Figur 3 ersichtlichen Darstellung Transportmittel 28 vorgesehen. Diese Transportmittel 28 können beispielsweise autonome mobile Roboter oder automatisierte, fahrerlose Transportfahrzeuge umfassen. Durch diese sind die einzelnen Komponenten aufnehmbar, in den Be- und Entladebereich 8 verfahrbar und dort absetzbar und anordenbar.

Zum Kalibrieren und Ausrichten eines im Be- und Entladebereich 8, insbesondere in der mobilen Handlingzelle 12 angeordneten Handlinggeräts 18, kann eine Kalibriereinrichtung 30 vorgesehen sein. Diese kann zum einen ein Anzeigemittel 32 umfassen, das beispielsweise im Be- und Entladebereich 8 festgelegt ist. Ferner kann die Kalibriereinrichtung 30 ein optisches Erfassungsmittel 34 umfassen, das am Handlinggerät 18 festgelegt ist. Das Anzeigemittel 32 kann beispielsweise einen Data-Matrix-Code umfassen. Zum Auswerten der durch das optische Erfassungsmittel 34 erfassten Bilder, umfasst das Handlinggerät 18 eine Steuereinheit 36. Diese dient zudem zum Betrieb des Handlinggeräts 18 zum Be- und Entladen der Werkzeugmaschine 6 mit Funktionsteilen.

Darüber hinaus ist durch die Steuereinheit 36, der das Erfassungsmittel 34 funktional zuordenbar ist, ein optisches Erfassen der durch das Handlinggerät 18 zu greifenden und zu transportierenden Funktionsteilen ermöglicht.

Um die Steuereinheit 36 während eines Verfahrens von einer Werkzeugmaschine 6 zu einer weiteren Werkzeugmaschine 6 aktiv zu halten, umfasst das Handlinggerät 18 einen elektrischen Energiespeicher 38. Dieser ist zumindest derart ausgelegt, dass die Steuereinheit 36 beim Verfahren des Handlinggeräts 18, beispielsweise durch eines der Transportmittel 28 aktiv bleibt. Hierdurch sind Inbetriebnahme Zeiten des Handlinggeräts 18 beim Neuinstallieren in einen Be- und Entladebereich 8 verkürzt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Be- und Entladezelle
- 4: Speicherzelle
- 6: Werkzeugmaschine
- 8: Be- und Entladebereich
- 10: Speicherzellen-Wandelement
- 12: Handlingzelle
- 14: Handlingzellen-Wandelement
- 16: Schutzwandung
- 18: Handlinggerät
- 20: Festlegeeinrichtung
- 22: Funktionswagen
- 24: Öffnung
- 26: Funktionswagen-Wandelement
- 28: Transportmittel
- 30: Kalibriereinrichtung
- 32: Anzeigemittel
- 34: Erfassungsmittel
- 36: Steuereinheit
- 38: elektrischer Energiespeicher

## Patentansprüche

1. Modulare Be- und Entladezelle (2), die an mindestens einer Werkzeugmaschine (6) anordenbar ist und von der aus die Werkzeugmaschine (6) be- und entladbar ist, mit mindestens einer mobilen Speicherzelle (4), die in einem vor der Werkzeugmaschine (6) angeordneten und einseitig durch die Werkzeugmaschine (6) begrenzten Be- und Entladebereich (8) anordenbar ist und die mindestens ein in einer vertikalen Ebene erstrecktes, flächenhaftes Speicherzellen-Wandelement (10) umfasst, und mit mindestens einer mobilen Handlingzelle (12), die im Be- und Entladebereich (8) mobil anordenbar ist und die mindestens ein in einer vertikalen Ebene erstrecktes Handlingzellen-Wandelement (14) umfasst, wobei Speicherzelle (4) und Handlingzelle (12) als separate Zellen ausgebildet und unabhängig voneinander bewegbar sind und wobei zumindest das mindestens eine Speicherzellen-Wandelement (10) und das mindestens eine Handlingzellen-Wandelement (14) bei einer gemeinsamen Anordnung von Speicherzelle (4) und Handlingzelle (12) im Be- und Entladebereich (8) eine gemeinsame Schutzwandung (16) bilden, die den Be- und Entladebereich (8) umfangsseitig umgibt und die den Be- und Entladebereich (8) nach außen abschirmt.

2. Modulare Be- und Entladezelle (2) nach Anspruch 1, dass die Handlingzelle (12) im Be- und Entladebereich (8) unmittelbar an die Werkzeugmaschine (6) angrenzend angeordnet ist und mindestens zwei Handlingzellen-Wandelemente (14) umfasst, die beim im Be- und Entladebereich (8) angeordneten Zustand der Handlingzelle (12) auf einander gegenüberliegenden Seiten des Be- und Entladebereich (8) angeordnet sind und dass die Speicherzelle (4) im Be- und Entladebereich (8) unmittelbar an die Handlingzelle (12) angrenzend auf einer der Werkzeugmaschine (6) abgewandten Seite der Handlingzelle (12) angeordnet ist und die mindestens ein Speicherzellen-Wandelement (10) umfasst, wobei das mindestens eine Speicherzellen-Wandelement (10) insgesamt einen U-förmigen Querschnitt umfasst und mit den der Handlingzelle (12) zugewandten freien Enden des mindestens einen Speicherzellen-Wandelements (10) unmittelbar an die zwei Handlingzellen-Wandelemente (14) angrenzend anordnet ist.

3. Modulare Be- und Entladezelle (2) nach Anspruch 1, dass die Speicherzelle (4) im Be- und Entladebereich (8) unmittelbar an die Werkzeugmaschine (6) angrenzend angeordnet ist und mindestens zwei Speicherzellen-Wandelemente (10) umfasst, die beim im Be- und Entladebereich (8) angeordneten Zustand der Speicherzelle (4) auf einander gegenüberliegenden Seiten des Be- und Entladebereich (8) angeordnet sind und dass die Handlingzelle (12) im Be- und Entladebereich (8) unmittelbar an die Speicherzelle (4) angrenzend auf einer der Werkzeugmaschine (6) abgewandten Seite der Speicherzelle (4) angeordnet ist und die mindestens ein Handlingzellen-Wandelement (14) umfasst, wobei das mindestens eine Handlingzellen-Wandelement (14) insgesamt einen U-förmigen Querschnitt umfasst und mit den der Speicherzelle (4) zugewandten freien Enden des mindestens einen Handlingzellen-Wandelements (14) unmittelbar an die zwei Speicherzellen-Wandelemente (10) angrenzend anordnet ist.

4. Modulare Be- und Entladezelle (2) nach einem der vorhergehenden Ansprüche, **gekennzeichnet durch** mindestens einen bewegbaren Funktionswagen (22), der über mindestens eine Öffnung (24) im Speicherzellen-Wandelement (10) in die Speicherzelle (4) bewegbar und darin anordenbar ist und auf dem mindestens ein Funktionselement, wie Werkstück, Greifelement, Einspannvorrichtung für ein Werkstück, und/oder Werkzeug, angeordnet ist und der mindestens ein in einer vertikalen Ebene erstrecktes Funktionswagen-Wandelement (26) umfasst, das in einer in der Speicherzelle (4) angeordneten Anordnung des Funktionswagens (22) mindestens ein der mindestens einen Öffnung (24) verschließt.

5. Modulare Be- und Entladezelle (2) nach einem der vorhergehenden Ansprüche, **gekennzeichnet durch** mindestens ein stationäres oder bewegbares Handlinggerät (18), das zum Be- und Entladen der Werkzeugmaschine (6) mit Funktionselementen in der Handlingzelle (12) anordenbar oder angeordnet ist.

6. Modulare Be- und Entladezelle (2) nach Anspruch 5, **dadurch gekennzeichnet, dass** das Handlinggerät (18) lösbar, insbesondere form- oder kraftschlüssig, oder unlösbar, insbesondere form-, stoff- und/oder kraftschlüssig, an der Handlingzelle (12) festgelegt ist und dass Handlinggerät (18) und Handlingzelle (12) gemeinsam bewegbar ausgebildet sind.

7. Modulare Be- und Entladezelle (2) nach einem der Ansprüche 4 bis 6, **dadurch gekennzeichnet, dass** mindestens einer des mindestens einen bewegbaren Funktionswagens (22) mindestens einen Werkstückwagen, an dem oder auf dem zumindest mindestens ein durch die Werkzeugmaschine (6) zu bearbeitendes oder durch die Werkzeugmaschine (6) bearbeitetes Werkstück anordenbar ist oder angeordnet, mindestens einen Werkzeugwagen, an dem oder auf dem zumindest mindestens ein Werkzeug für die Werkzeugmaschine (6) oder von der Werkzeugmaschine (6) anordenbar oder angeordnet ist, mindestens einen Einspannvorrichtungsgwagen, an dem oder auf dem zumindest mindestens eine für ein Werkstück anordenbar oder angeordnet ist, oder mindestens einen Greiferwagen umfasst, an dem oder auf dem zumindest mindestens ein Greifmittel für das Handlinggerät (18) zum Greifen mindestens eines Werkzeug anordenbar oder angeordnet ist.

8. Modulare Be- und Entladezelle (2) nach einem der vorhergehenden Ansprüche, **dadurch gekennzeichnet, dass** die Speicherzelle (4) mindestens ein Speicherzellen-Antriebsmittel umfasst, durch das die Speicherzelle (4) eigenbeweglich verfahrbar ist, dass die Handlingzelle (12) mindestens ein Handlingzellen-Antriebsmittel umfasst, durch das die Handlingzelle (12) eigenbeweglich verfahrbar ist, dass mindestens einer des mindestens einen Funktionswagens (22) mindestens ein Funktionswagen-Antriebsmittel umfasst, durch das der Funktionswagen (22) eigenbeweglich verfahrbar ist und/oder dass mindestens einer des mindestens einen Handlinggeräts (18) mindestens ein Handlinggerät-Antriebsmittel umfasst, durch das das Handlinggerät (18) eigenbeweglich verfahrbar ist.

9. Modulare Be- und Entladezelle (2) nach einem der vorhergehenden Ansprüche, **gekennzeichnet durch** mindestens ein Transportmittel (28), wie autonomer mobiler Roboter (18) oder automatisiertes fahrerloses Transportfahrzeug, durch das die Speicherzelle (4) und/oder die Handlingzelle (12) transportierbar und im Be- und Entladebereich (8) anordenbar oder entfernbar ist und/oder durch das mindestens einer des mindestens einen Funktionswagens (22) transportierbar und in der im Be- und Entladebereich (8) angeordneten Speicherzelle (4) und/oder mindestens eines des mindestens einen Handlinggeräts (18) transportierbar in der im Be- und Entladebereich (8) angeordneten Handlingzelle (12) anordenbar oder entfernbar ist.

10. Modulare Be- und Entladezelle (2) nach einem der Ansprüche 5 bis 9, **gekennzeichnet durch** mindestens eine Festlegeinrichtung (20), die mindestens ein Be- und Entlade-Festlegemittel umfasst, das im Be- und Entladebereich (8) angeordnet ist, und die mindestens ein Handlinggerät-Festlegemittel umfasst, das am Handlinggerät (18) festgelegt ist und durch das das Handlinggerät (18) im Be- und Entladebereich (8) relativ zur Werkzeugmaschine (6) lösbar, insbesondere form- und/oder kraftschlüssig, am Be- und Entlade-Festlegemittel ortsfest festlegbar ist.

11. Modulare Be- und Entladezelle (2) nach einem der Ansprüche 5 bis 10, **dadurch gekennzeichnet, dass** das mindestens eine Handlinggerät (18) einen elektrischen Energiespeicher (38) umfasst, durch den das Handlinggerät (18) zumindest beim Verfahren mit elektrischer Energie versorgbar ist und/oder dass das Handlinggerät (18) eine Steuereinheit (36) umfasst, durch die das Handlinggerät (18) zum Be- und Entladen der Werkzeugmaschine (6) ansteuerbar ist und die beim Verfahren des Handlinggeräts (18) aktiv ist und insbesondere durch den elektrischen Energiespeicher (38) mit elektrischer Energie versorgbar ist.

12. Modulare Be- und Entladezelle (2) nach einem der Ansprüche 5 bis 11, **gekennzeichnet durch** mindestens eine elektrische Energieversorgung, die mindestens einen Zugang im Be- und Entladebereich (8), und die mindestens ein Handlinggerät-Koppelmittel umfasst, das am Handlinggerät (18) festgelegt ist und durch das das Handlinggerät (18) im Be- und Entladebereich (8) mit der elektrischen Energieversorgung koppelbar und durch die elektrische Energieversorgung zum Betrieb mit elektrischer Energie versorgbar ist.

13. Modulare Be- und Entladezelle (2) nach einem der Ansprüche 5 bis 12, **gekennzeichnet durch** mindestens eine Kalibriereinrichtung (30), die mindestens ein ortsfest im Be- und Entladebereich (8) festgelegtes, insbesondere einen Data-Matrix-Code umfassendes, Anzeigemittel (32), und die mindestens ein optisches Erfassungsmittel (34), wie Sensor oder Kamera, das am Handlinggerät (18) festgelegt ist, durch das das mindestens eine Funktionselement und/oder durch das das Anzeigemittel (32) erfassbar ist.

14. Modulare Be- und Entladezelle (2) nach Anspruch 13, **dadurch gekennzeichnet, dass** das optische Erfassungsmittel (34) der Steuereinheit (36) funktional zugeordnet ist und dass das Handlinggerät (18) durch die Steuereinheit (36) zum Aufnehmen und Ablegen von Funktionselementen ansteuerbar und/oder zum Kalibrieren des Bezugsorts relativ zur Werkzeugmaschine (6) kalibrierbar ist.

15. Modulare Be- und Entladezelle (2) nach einem der Ansprüche 5 bis 14, **gekennzeichnet durch** mindestens eine Führungseinrichtung umfasst, die mindestens ein zwischen mindestens zwei Be- und Entladebereichen (8) zweier Werkzeugmaschinen (6) erstrecktes Schienenmittel und die mindestens ein Schlittenmittel umfasst, das am Handlinggerät (18) festgelegt ist und durch das das Handlinggerät (18) geführt vom Be- und Entladebereiche (8) einer ersten Werkzeugmaschine (6) zum Be- und Entladebereich (8) mindestens einer weiteren Werkzeugmaschine (6) bewegbar ist.
